# EUROPÄISCHE PATENTSCHRIFT

(11) **EP 2 753 838 B1**
(45) Veröffentlichungstag und Bekanntmachung des Hinweises auf die Patenterteilung: **09.11.2016**
(21) Anmeldenummer: 12733775.6
(22) Anmeldetag: 13.07.2012
(51) Int. Cl.: F16C 33/64, F16C 41/00, F16C 19/38, G01B 7/00

(54) **VERFAHREN ZUR HERSTELLUNG EINES WÄLZLAGERS**
MANUFACTURING METHOD OF A ROLLING BEARING
PROCÉDÉ DE FABRICATION D'UN PALIER DE ROULEMENT

(30) Priorität: 07.09.2011 DE 102011082221
(43) Veröffentlichungstag der Anmeldung: 16.07.2014
(73) Patentinhaber: Schaeffler Technologies AG & Co. KG, 91074 Herzogenaurach (DE)
(72) Erfinder: SCHMID, Günter, 90475 Nürnberg (DE); HILBINGER, Jürgen, 91413 Neustadt/A. (DE)
(86) Internationale Anmeldenummer: PCT/EP2012/063794
(87) Internationale Veröffentlichungsnummer: WO 2013/034341

(56) Entgegenhaltungen:
- WO-A1-2011/001886
- DE-A1- 19 640 895
- DE-A1-102006 031 718
- US-A- 6 113 276

## Beschreibung

Die Erfindung betrifft ein Verfahren zur Herstellung eines Wälzlagers, mit einem inneren Lagerring und einem äußeren Lagerring, die relativ zueinander bewegbar sind, mit einer entweder am inneren Lagerring oder am äußeren Lagerring angebrachten Maßverkörperung, die durch einen am anderen Lagerring angebrachten Sensor erfassbar ist.

### Hintergrund der Erfindung

Wälzlager dieser Art werden beispielsweise für Rundtische in Werkzeugmaschinen eingesetzt. Es handelt sich dabei um hochdynamische Direktantriebe, die für die Fräs- oder Drehbearbeitung von Werkstücken eingesetzt werden. Ein Rundtisch wird mittels eines Torquemotors und zugehörigen Umrichtern und Reglern angetrieben. Für Fräs- und Drehbearbeitungen wird ein Messsystem mit hoher Genauigkeit und Winkelauflösung bevorzugt, wobei sowohl optische als auch magnetoresistive Winkelmesssysteme angeboten werden.

Von der Anmelderin werden Rundtischlager mit der Bezeichnung YRT bzw. YRTM hergestellt, bei denen der äußere Lagerring, der auch als Gehäusescheibe bezeichnet wird, mit einem Maschinen- oder Rundtischgrundgestell verschraubt ist. Der innere Lagerring, der auch als Winkelring bezeichnet wird, ist drehbar ausgebildet und mit dem Drehtisch verschraubt. Der Winkelring ist häufig mit einer oberen Wellenscheibe verbunden, die gemeinsam mit dem Winkelring gedreht wird. Axial-Radiallager dieses Typs werden in der Veröffentlichung "Axial-Radiallager mit integriertem Winkel-Mess-System", herausgegeben im September 2007 von der Schaeffler KG, beschrieben.

Um fehlerfreie elektrische Winkelsignale zu erhalten, muss zwischen einem in einem Messkopf verbauten Sensor und einer Maßverkörperung ein definierter Abstand präzise eingestellt werden. Dieser Abstand oder Messspalt wird bei dem Axial-Radiallager YRTM durch Unterlegen von Abstimmbeilagen eingestellt. Die Abstimmbeilagen sind dünne Metallfolien, die in verschiedenen Dicken geliefert werden. Der Messkopf wird an dem nicht rotierenden äußeren Lagerring befestigt. Beim Einrichten eines derartigen Axial-Radiallagers mit integriertem Winkelmesssystem ist ein PC, ein Schnittstellenkabel zwischen PC und dem Messsystem und eine spezielle Software erforderlich, mit deren Hilfe der Messspalt elektronisch über die Signalstärke erfasst wird. Um den Messspalt und damit die Signalstärke richtig einzustellen, sind normalerweise mehrere iterative Versuche erforderlich. Die erforderliche exakte Einstellung des Abstands ist daher wegen der erforderlichen Hilfsmittel aufwändig und resultiert in einem hohen Zeitaufwand.

Neben optisch erfassbaren Maßverkörperungen ist bereits vorgeschlagen worden eine Winkelmessung mit magnetisch kodierten Winkelringen durchzuführen. In der von der Anmelderin stammenden DE 10 2008 033 616 A1 wird ein Lager beschrieben, bei dem eine Maßverkörperung durch Aufbringen eines magnetischen Materials hergestellt wird. Dieses magnetische Material kann als pastöse Masse oder in einer Kunststoffmatrix aufgebracht werden. Die dazu erforderliche Beschichtung ist allerdings nur bei kleineren Wälzlagern mit einem Innendurchmesser von ca. 50 bis 460 mm wirtschaftlich durchführbar, größere Lager, etwa bis zu einem Durchmesser von 3.000 mm, können auf diese Weise jedoch nicht wirtschaftlich hergestellt werden, da die dafür erforderlichen Beschichtungsvorrichtungen und galvanischen Bäder sehr groß wären. Zudem muss eine Vielzahl von magnetischen Polen der Polbreite 500 µm erzeugt werden, was lediglich nach und nach möglich ist. Bei größeren Lagern nimmt die für die Erzeugung der Maßverkörperung erforderliche Kodierzeit extrem zu, wodurch sich hohe Herstellungskosten ergeben.

DE 196 40 895 offenbart ein Lager mit einem Innenring und einem Außenring. Am Innenring ist eine Massverkörperung angebracht, die durch einen am Außenring angebrachten Sensor erfassbar ist.

### Aufgabe der Erfindung

Ausgehend von den Nachteilen des bekannten Standes der Technik liegt der Erfindung daher die Aufgabe zugrunde, ein Verfahren zur Herstellung eines Wälzlagers mit einer Maßverkörperung anzugeben, welches Wälzlager ohne eine aufwändige Justierung eines Messspalts eingesetzt werden kann.

### Beschreibung der Erfindung

Diese Aufgabe wird durch ein Verfahren nach Anspruch 1 gelöst.

Die Erfindung beruht auf der Erkenntnis, dass der innere und der äußere Lagerring des Wälzlagers mit sehr hoher Präzision im Bereich weniger Hundertstel Millimeter gefertigt werden, wodurch eine Rund- und Planlaufgenauigkeit innerhalb weniger Tausendstel Millimeter erreicht wird. Dadurch ergibt sich ein ausreichend genauer und konstanter Abstand zwischen einer Fläche des äußeren Lagerrings und einer Fläche des inneren Lagerrings, wobei der Messring entweder am inneren Lagerring oder am äußeren Lagerring und der Sensor an dem anderen Lagerring angebracht ist. Die bisher erforderliche aufwändige manuelle Einstellung des Messspalts zwischen Maßverkörperung und Sensor kann entfallen, da der Abstand zwischen den Flächen des inneren Lagerrings und des äußeren Lagerrings mit hoher Präzision hergestellt ist.

Eine besonders genaue Winkelmessung wird ermöglicht, wenn der innere Lagerring oder der äußere Lagerring eine Befestigungsfläche für den Sensor aufweist, die in einem definierten Abstand zu dem Messring oder einer Anlagefläche des Messrings angeordnet ist. Auf diese Weise kann der Sensor an einer definierten Stelle an einem der Lagerringe befestigt werden, die einen festgelegten Abstand zu dem Messring oder vorzugsweise zu einer Anlagefläche des Messrings aufweist.

Im Rahmen der Erfindung ist vorgesehen, dass die Befestigungsfläche für den Sensor und die Anlagefläche des Messrings gemeinsam im Schuhschleifverfahren hergestellt sind. Auf diese Weise kann der gewünschte genau definierte Abstand erzeugt werden.

Eine Weiterbildung der Erfindung sieht vor, dass die Maßverkörperung des Messrings eine induktiv erfassbare Winkelteilung aufweist, die mittels eines induktiven Sensors abtastbar ist. Die induktiv erfassbare Winkelteilung kann wesentlich einfacher als die erwähnte Beschichtung mit einem magnetischen Material erzeugt werden, zudem kann die induktiv erfassbare Winkelteilung auch bei Lagern mit großem Innendurchmesser, beispielsweise bei Innendurchmessern zwischen 500 mm und 3000 mm, vergleichsweise schnell und kostengünstig angebracht werden.

Es liegt auch im Rahmen der Erfindung, dass der Messring und der innere Lagerring bzw. der Messring und der äußere Lagerring über eine Presspassung miteinander verbunden sind. Der Messring ist separat vom inneren bzw. äußeren Lagerring hergestellt und mit der Maßverkörperung versehen, anschließend wird der Messring auf den inneren Lagerring oder den äußere Lagerring aufgepresst. Die Anlagefläche des Messrings an dem inneren Lagerring oder dem äußeren Lagerring befindet sich in einem definierten Abstand zu der Befestigungsfläche für den Sensor auf dem jeweils anderen Ring, wodurch sich der benötigte exakte Abstand ergibt, durch den der exakte und konstante Messspalt entsteht.

Eine besonders bevorzugte Ausführung der Erfindung sieht vor, dass das Wälzlager einen drehbaren inneren Lagerring mit einem Winkelring und einer damit verbundenen Winkelscheibe umfasst und dass der Messring an dem Winkelring oder der Wellenscheibe befestigt ist. Dementsprechend sind die rotierende Wellenscheibe und der Winkelring fest miteinander verbunden, die Wellenscheibe und der Winkelring sind mit Laufbahnen für Wälzkörper versehen.

Bei dem erfindungsgemäßen Wälzlager kann der induktive Sensor mit dem feststehenden äußeren Lagerring verschraubt sein, sodass die Montage des Sensors höchst einfach ist, da kein Messspalt einzustellen ist. Die Inbetriebnahme eines Wälzlagers, das beispielsweise als Rundtischlager einer Werkzeugmaschine eingesetzt wird, erschöpft sich somit in dem Anschrauben des induktiven Sensors, ohne dass Justierarbeiten wie die iterative Einstellung des Messspalts erforderlich wären.

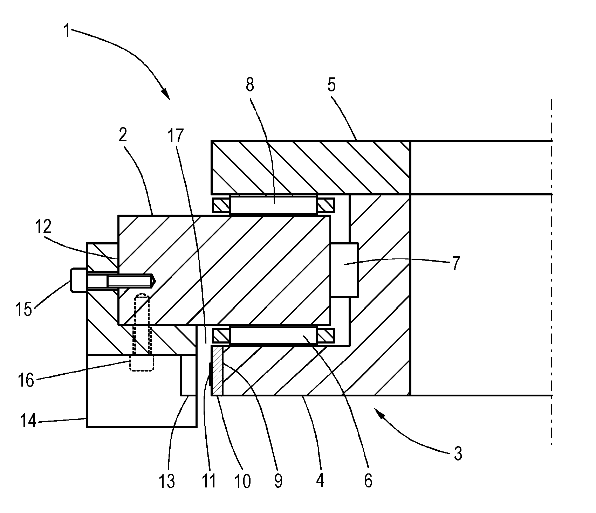

### Kurze Beschreibung der Zeichnung

Eine bevorzugte Ausführungsform der Erfindung wird nachfolgend unter Bezugnahme auf die beigefügten Zeichnungen näher erläutert. Die einzigste Zeichnung zeigt dabei eine geschnittene Ansicht eines erfindungsgemäß hergestellten Wälzlagers.

### Ausführliche Beschreibung der Zeichnung

Das in der Zeichnung gezeigte Wälzlager 1 umfasst einen feststehenden äußeren Lagerring 2 und einen relativ zu dem äußeren Lagerring 2 drehbaren inneren Lagerring 3. Der innere Lagerring 3 umfasst im Wesentlichen einen Winkelring 4, der mit einer Winkelscheibe 5 verbunden ist. Wie in der Zeichnung gezeigt ist, bilden der Winkelring 4 und die Wellenscheibe 5 gemeinsam näherungsweise ein C-Profil, das Laufbahnen für Wälzkörper 6, 7, 8 umfasst. Der drehbare innere Lagerring 3 ist über die Wälzkörper 6, 7, 8 drehbar im äußeren Lagerring 2 gelagert.

Der Winkelring 4 weist eine umlaufende zylindrische Anlagefläche 9 für einen Messring 10 auf. Der Messring 10 ist mit dem inneren Lagerring 3, genauer gesagt mit dem Winkelring 4, über eine Presspassung verbunden. An seiner Außenseite weist der Messring 10 eine induktiv erfassbare Maßverkörperung 11 auf. In dem dargestellten Ausführungsbeispiel umfasst die Maßverkörperung 11 eine Vielzahl von parallelen axialen Linien, die an der Außenseite des Messrings 10 ausgebildet sind. In der Zeichnung ist die Maßverkörperung 11 zur Veranschaulichung vergrößert dargestellt.

Der äußere Lagerring 2 weist an seiner Außenseite eine Befestigungsfläche 12 auf, an der ein einen Sensor 13 aufweisender Messkopf 14 befestigt ist. Der Sensor 13 ist ein induktiver Sensor, der die Maßverkörperung 11 erfasst und entsprechende Winkelsignale erzeugt, die zur Steuerung einer Drehbewegung des inneren Lagerrings 3 des Wälzlagers 1 verwendet werden. Die Befestigung des Messkopfs 14 an dem äußeren Lagerring 2 erfolgt mittels einer Schraube 15, deren Längsachse in Radialrichtung verläuft. Selbstverständlich können zum Befestigen des Messkopfes 14 zwei oder mehr derartige Schrauben 15 verwendet werden. Wie durch die gestrichelt gezeichnete Schraube 16 gezeigt ist, kann der Messkopf 14 alternativ auch mittels wenigstens einer axial angeordneten Schraube 16 befestigt sein.

Zwischen dem Sensor 13 und dem Messring 10 ist ein äußerst präziser Messspalt 17 gebildet. Der konstante Abstand zwischen dem Sensor 13 und dem Messring 10 beruht darauf, dass sowohl die Befestigungsfläche 12 für den Messkopf 14 mit Bezug auf die Laufbahn am äußeren Lagerring 2, auf der die Wälzkörper 7 abrollen, als auch die Anlagefläche 9 für den Messring 10 mit Bezug auf die Laufbahn am inneren Lagerring 3, auf der die Wälzkörper 7 ebenfalls abrollen, gemeinsam im Schuhschleifverfahren hergestellt worden sind. Auf diese Weise kann der erforderliche präzise und konstante Abstand zwischen Sensor 13 und Messring 10 erzeugt werden. Auf die Anlagefläche 9 des Winkelrings 4 wird der separat gefertigte und mit der Maßverkörperung 11 versehene Messring 10 aufgepresst. Bei der Montage des Wälzlagers 1, beispielsweise in einem Rundtisch einer Werkzeugmaschine, wird lediglich der Messkopf 14, der den Sensor 13 umfasst, mit dem äußeren Lagerring 2 verschraubt, wodurch sich automatisch der benötigte Messspalt 17 ergibt. Der auf diese Weise erzeugte präzise Messspalt macht eine individuelle Kalibrierung oder Abstimmung entbehrlich.

Das Wälzlager 1 eignet sich für den Einbau in spanenden Werkzeugmaschinen, bei A-, B- und C-Achsen sowie für Rundtische, die Lagerung von Schwenkbrücken, Rundachslagerungen in Gabelfräsköpfen, Fräsbearbeitungsköpfe in Drehmaschinen und dergleichen.

### Bezugszahlenliste

- 1: Wälzlager
- 2: äußerer Lagerring
- 3: innerer Lagerring
- 4: Winkelring
- 5: Wellenscheibe
- 6: Wälzkörper
- 7: Wälzkörper
- 8: Wälzkörper
- 9: Anlagefläche
- 10: Messring
- 11: Maßverkörperung
- 12: Befestigungsfläche
- 13: Sensor
- 14: Messkopf
- 15: Schraube
- 16: Schraube
- 17: Messspalt

## Patentansprüche

1. Verfahren zur Herstellung eines Lagers, mit einem Innenring und einem Außenring, die relativ zueinander bewegbar sind, mit einer entweder am Innenring oder am Außenring angebrachten Maßverkörperung, die durch einen am anderen Ring angebrachten Sensor (13) erfassbar ist, wobei das Lager (1) einen die Maßverkörperung (11) aufweisenden Messring (10) umfasst, der an dem Innenring (3) oder dem Außenring (2) befestigt wird, **dadurch gekennzeichnet, dass** der Innenring (3) oder der Außenring (2) eine Befestigungsfläche (12) für den Sensor (13) aufweist, die in einem definierten Abstand zu dem Messring (10) oder einer Anlagefläche (9) des Messrings (10) angeordnet wird, indem die Befestigungsfläche (12) für den Sensor (13) und die Anlagefläche (9) des Messrings (10) gemeinsam im Schuhschleifverfahren hergestellt werden.

2. Verfahren nach Anspruch 1, **dadurch gekennzeichnet, dass** die Maßverkörperung (11) des Messrings (10) eine induktiv erfassbare Winkeiteilung aufweist, die mittels eines induktiven Sensors (13) abtastbar ist.

3. Verfahren nach Anspruch 1 oder 2, **dadurch gekennzeichnet, dass** der Messring (10) und der Innenring (3) oder der Messring (10) und der Außenring (2) über eine Presspassung miteinander verbunden werden.

4. Verfahren nach einem der vorangehenden Ansprüche, **dadurch gekennzeichnet, dass** es einen drehbaren Innenring (3) mit einem Winkelring (4) und einer damit verbundenen Wellenscheibe (5) umfasst und dass der Messring (10) an dem Winkelring (4) oder der Wellenscheibe (5) befestigt wird.

5. Verfahren nach einem der vorangehenden Ansprüche, **dadurch gekennzeichnet, dass** der induktive Sensor (13) mit dem feststehenden Außenring (2) verschraubt wird.

## Claims

1. Method for producing a bearing, comprising an inner ring and an outer ring which can move relative to one another, comprising a material measure which is attached either to the inner ring or to the outer ring and which can be detected by a sensor (13) which is attached to the other ring, wherein the bearing (1) comprises a measuring ring (10) which has the material measure (11) and which is fastened to the inner ring (3) or to the outer ring (2), **characterized in that** the inner ring (3) or the outer ring (2) has a fastening surface (12) for the sensor (13), the said fastening surface being arranged at a defined distance from the measuring ring (10) or a contact surface (9) of the measuring ring (10) by the fastening surface (12) for the sensor (13) and the contact surface (9) of the measuring ring (10) being jointly produced using a shoe grinding process.

2. Method according to Claim 1, **characterized in that** the material measure (11) of the measuring ring (10) has an angular pitch which can be inductively detected and which can be scanned by means of an inductive sensor (13).

3. Method according to Claim 1 or 2, **characterized in that** the measuring ring (10) and the inner ring (3) or the measuring ring (10) and the outer ring (2) are connected to one another by means of a press fit.

4. Method according to one of the preceding claims, **characterized in that** it comprises a rotatable inner ring (3) with an angular ring (4) and an associated wave washer (5), and **in that** the measuring ring (10) is fastened to the angular ring (4) or to the wave washer (5).

5. Method according to one of the preceding claims, **characterised in that** the inductive sensor (13) is screwed to the stationary outer ring (2).

## Revendications

1. Procédé de fabrication d'un palier, comprenant une bague intérieure et une bague extérieure qui peuvent être déplacées l'une par rapport à l'autre, avec une mesure matérialisée montée soit sur la bague intérieure soit sur la bague extérieure, qui peut être détectée par un capteur (13) monté sur l'autre bague, le palier (1) présentant une bague de mesure (10) présentant la mesure matérialisée (11), qui est fixée sur la bague intérieure (3) ou la bague extérieure (2), **caractérisé en ce que** la bague intérieure (3) ou la bague extérieure (2) présente une surface de fixation (12) pour le capteur (13) qui est disposée à une distance définie de la bague de mesure (10) ou d'une surface d'appui (9) de la bague de mesure (10), la surface de fixation (12) pour le capteur (13) et la surface d'appui (9) de la bague de mesure (10) étant pour cela fabriquées ensemble dans un processus de meulage à sabot.

2. Procédé selon la revendication 1, **caractérisé en ce que** la mesure matérialisée (11) de la bague de mesure (10) présente une division angulaire détectable par induction qui peut être balayée au moyen d'un capteur inductif (13).

3. Procédé selon la revendication 1 ou 2, **caractérisé en ce que** la bague de mesure (10) et la bague intérieur (3) ou la bague de mesure (10) et la bague extérieure (2) sont connectées l'une à l'autre par le biais d'un ajustement serré.

4. Procédé selon l'une quelconque des revendications précédentes, **caractérisé en ce qu'**il comprend une bague intérieure rotative (3) avec une bague coudée (4) et une rondelle ondulée (5) connectée à celles-ci et **en ce que** la bague de mesure (10) est fixée à la bague coudée (4) ou à la rondelle ondulée (5).

5. Procédé selon l'une quelconque des revendications précédentes, **caractérisé en ce que** le capteur inductif (13) est vissé à la bague extérieure fixe (2).
